Europäisches Patentamt

**European Patent Office**

**Office européen des brevets**

(19)

(11) Publication number: **0 010 078**
**B1**

(12) **EUROPEAN PATENT SPECIFICATION**

(45) Date of publication of patent specification: **25.05.83**

(51) Int. Cl.³: **F 03 D 3/06**

(21) Application number: **79850092.2**

(22) Date of filing: **04.10.79**

(54) Wind turbine of cross-flow type.

(30) Priority: **06.10.78 SE 7810503**

(43) Date of publication of application:
**16.04.80 Bulletin 80/8**

(45) Publication of the grant of the patent:
**25.05.83 Bulletin 83/21**

(84) Designated Contracting States:
**DE FR GB NL**

(56) References cited:
**DE - A - 2 630 487**
**FR - A - 2 319 028**
**US - A - 3 918 839**

(73) Proprietor: **Ljungström, Olle**
**Sälgstigen 12**
**S-181 62 Lidingö (SE)**

(72) Inventor: **Ljungström, Olle**
**Sälgstigen 12**
**S-181 62 Lidingö (SE)**

(74) Representative: **Geralf, Wilhelm et al,**
**W Geralf Patentbyra AB Kungsgatan 33**
**S-111 56 Stockholm (SE)**

Courier Press, Leamington Spa, England.

## Wind turbine of cross-flow type

The present invention relates to a wind turbine of cross-flow type and an object of the invention is to reduce variations in load acting on a support tower of the wind turbine in comparison with conventional turbines of the named kind. This and further objects are obtained according to the invention by the characteristic features of the wind turbine forming the subject of the claims.

The invention will be described in more detail below in connection with the accompanying drawings.

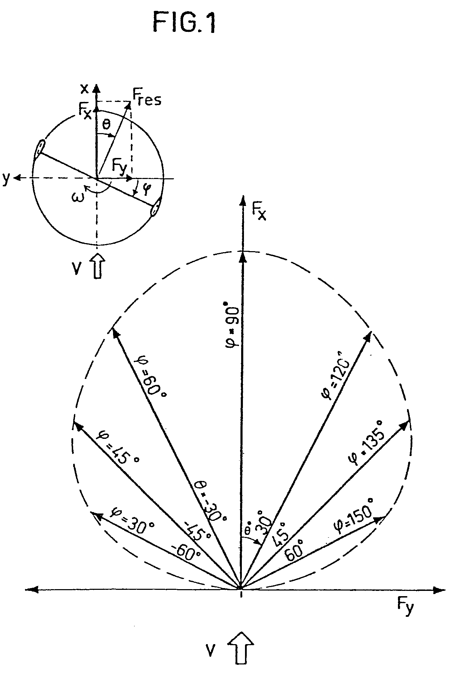

Figure 1 shows a top view of the distribution of the wind forces in a conventional two-vaned turbine of the cross-flow type such as a Darrieus-type turbine, and shows also in outline a diagram of the distribution of forces.

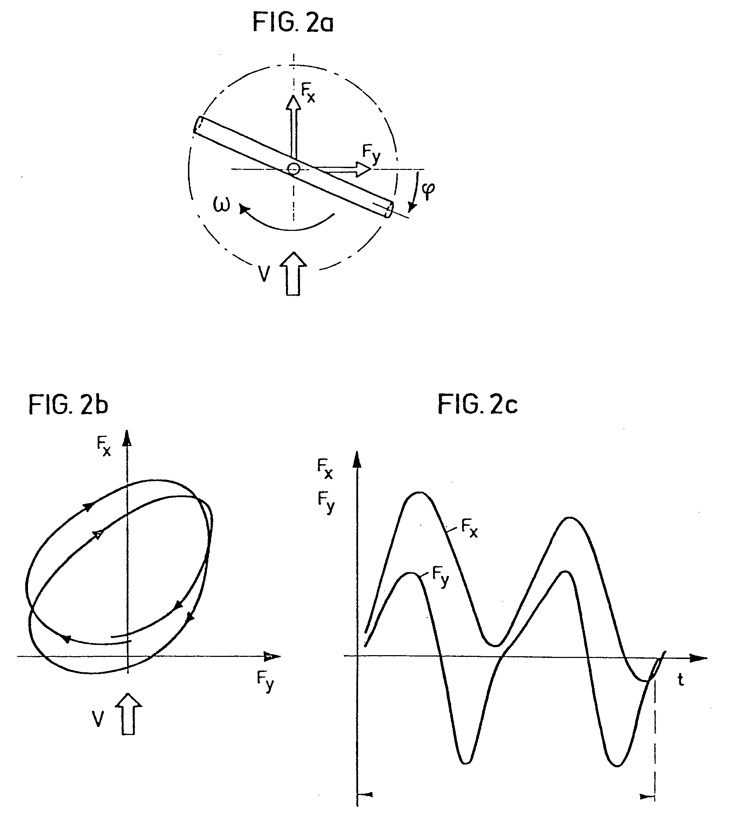

Figures 2a, 2b and 2c show the wind forces acting on a two-vaned Darrieus-type turbine of conventional construction with an angle of 180° between the vanes, Figure 2a being a top view of the turbine, Figure 2b an oscillogram of the distribution of forces and Figure 2c an oscillogram of the forces as a function of time.

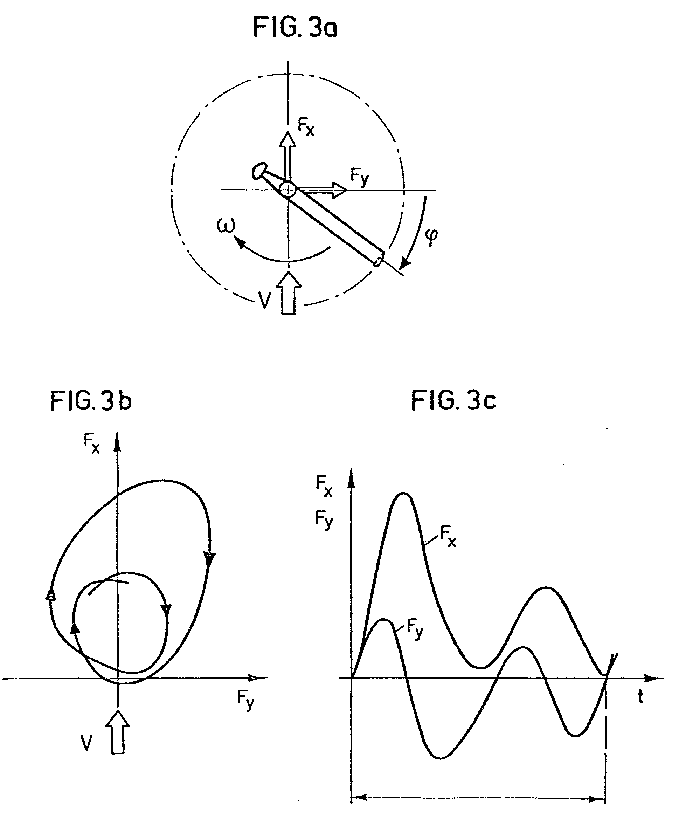

Figures 3a, 3b and 3c show the wind forces acting on a single-vaned turbine of the Darrieus type, Figure 3a being a top view of the turbine, Figure 3b an oscillogram of the forces, and Figure 3c an oscillogram of the forces in relationship to time.

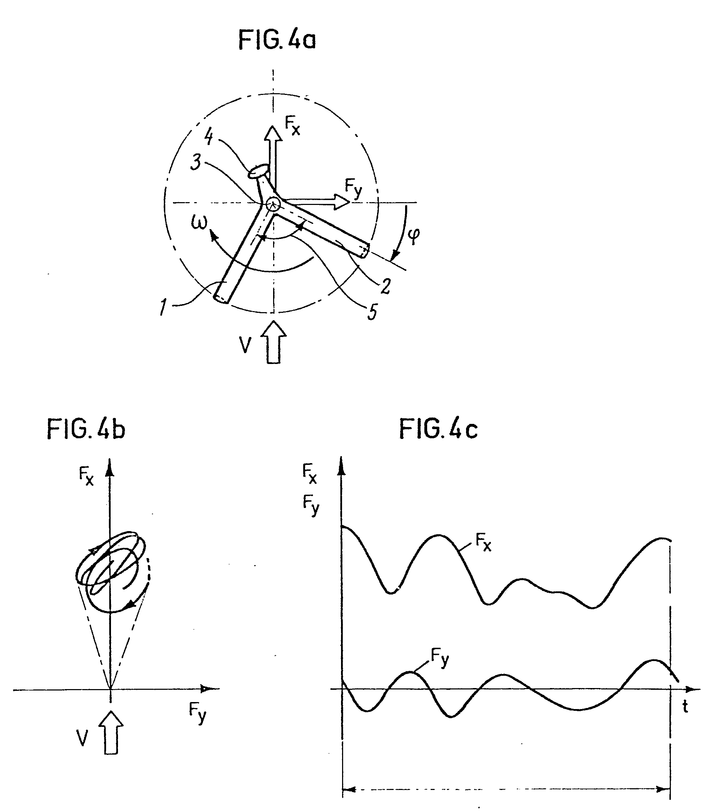

Figures 4a, 4b and 4c show the wind forces acting on a two-vaned cross-flow turbine of the Darrieus type according to the invention with an angle of 90° between the vanes, Figure 4a being a top view of the turbine, Figure 4b an oscillogram of the distribution of forces and Figure 4c an oscillogram of the forces in relationship to time.

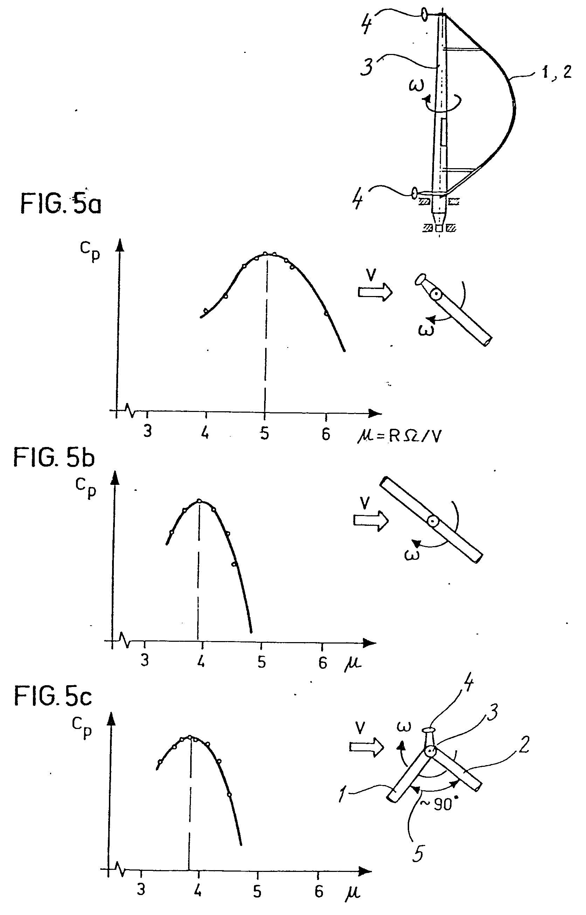

Figures 5a, 5b and 5c show in outline diagrams of characteristics of certain types of wind turbine, Figure 5a showing side view and a top view of a single-vaned turbine of the Darrieus type and a corresponding diagram, Figure 5b a top view of a two-vaned turbine of the Darrieus type and Figure 5c a top view of a two-vaned turbine constructed according to the invention and a corresponding diagram.

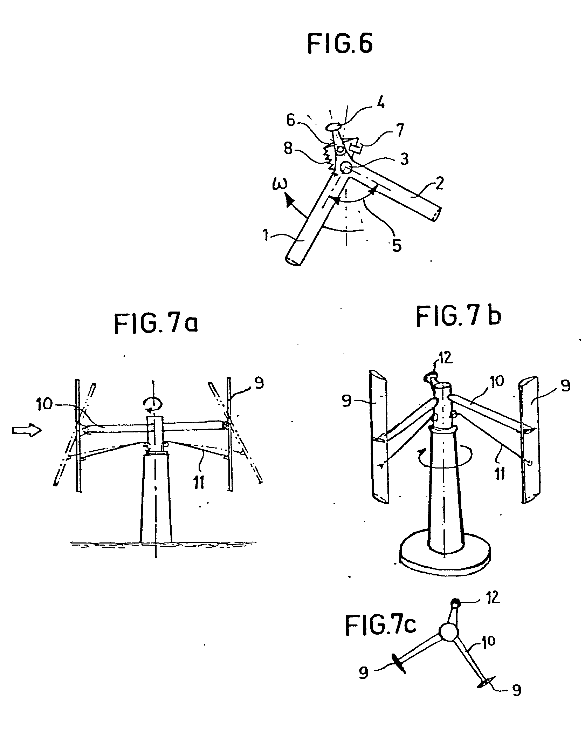

Figure 6 shows a top view of a turbine according to the invention which is balanced by means of balance weights.

Figure 7a shows a side view of a cross-flow turbine of known type, namely a two-vaned, vertical-axis turbine with straight vanes according to Musgrove, Reading University, while Figures 7b and 7c show a side view in perspective and a top view respectively of a modification of the same in which the L-vane arrangement according to this invention is provided.

In all figures $F_x$ and $F_y$ denote the force in the direction of, respectively, the x-axis and y-axis, $F_{res}$ the resulting force, $\theta$ the angle between the resulting force and the x-axis, $\phi$ the angle between turbine vane and the x-axis, V the velocity and direction of the wind, $C_p$ the power coefficient and $\mu$ the rotor speed ratio, i.e. $\mu=Re/V$ where R is the rotor radius, e is the rotor angular velocity and V is the wind velocity.

As is evident from Figures 1 and 2, which show distribution of forces and wind forces acting on a conventional two-vaned cross-flow turbine of Darrieus-type, having an angle of 180° between the turbine vanes, great variations in load occur under operation of the turbine, which variations in load constitute a severe problem in the operation of turbines of this type. This holds true also for a single-vaned turbine of Darrieus type, as will be understood from Figures 3a—3c.

According to the invention, there is therefore provided a wind turbine of the cross flow type having a rotor shaft and only two vanes mounted to said rotor shaft, the vanes being of airfoil cross section and each having a direction of extension in a plane containing said rotor shaft, characterized in that said planes of the two vanes are substantially perpendicular to one another. As is evident from Figures 4a, 4b and 4c, the result will be that the variations in load acting on the tower are reduced considerably in comparison with a conventional Darrieus-type turbine with one or two vanes, as has been shown in Figures 2—3. In tests it has been evidenced that the load on the turbine tower becomes almost constant in magnitude and direction and that the maximum load is only slightly more than one half of the maximum load on a conventional two-vaned Darrieus-type turbine. Even a three-bladed Darrieus-type turbine is subjected to greater load variations than a two-vaned turbine which has the vanes arranged according to the present invention.

The invention can be applied to all turbines of the cross-current type, both vertical-axis turbines and horizontal-axis ones.

Figures 5a—5c show a further comparison between two known turbine types and the turbine according to the invention with the power coefficient set out in relation to the rotor speed ratio.

The two sets of blades 1, 2 in the turbine according to the invention can also be mass-balanced about the turbine axis 3 by means of balance weights 4, as is illustrated in Figure 6. These balance weights 4 may also be two or more in number. The balance weights 4 may in this connection be suspended from bearings 6 in a self-aligning manner with little radial spacing from the rotor axis 3 and may as an alternative be equipped in any known manner with oscillation-modulating damping devices 7 and spring members 8 for return to a neutral position as is also shown in Figure 6. This arrangement can reduce vibration loads generated in the turbine tower.

Figure 7a shows the Musgrove-turbine with two vertical straight vanes 9 pivotally mounted on a crossarm 10 so that during rotation centrifugal forces bring them into an inclined position controlled by means of an extendable bracing 11.

Figures 7b and 7c show the Musgrove-turbine provided with the L-vane arrangement according to the invention that is with the blades or vanes 9 mounted on supporting arms 10 having an angle of substantially 90° between then together with a counter weight 12 on a separate arm arranged along the bisector of the supporting arms 10. The vanes 9 may be pivotable as shown in Figure 7a or fixed.

Although the invention has been described hereinbefore in connection with specific embodiments, it is clear that it may be varied within the scope of the appended claims.

## Claims

1. Wind turbine of the cross flow type having a rotor shaft and only two vanes mounted to said rotor shaft, the vanes being of airfoil cross section and each having a direction of extension in a plane containing said rotor shaft, characterized in that said planes of the two vanes (1, 2, 9) are substantially perpendicular to one another.

2. Wind turbine according to claim 1, characterized in that the two vanes (1, 2, 9) are mass-balanced about the rotor shaft (3) by means of two or more balance weights (4, 12).

3. Wind turbine according to claim 1 or 2, characterized in that the balance weights (4) are suspended from bearings (6) in a self-aligning manner with little radial spacing from the rotor axis (3).

4. Wind turbine according to claim 3, characterized in that the balance weights (4) are equipped with a vibration-modulating damping device (7) and a spring member (8) for return to a neutral position.

## Patentansprüche

1. Windturbine der Querstromart mit einer Läuferwelle und nur zwei an der besagten Läuferwelle angeordneten Flügeln, wobei die Flügel ein Tragflügelprofil besitzen und jeder Flügel sich in einer Richtung erstreckt, die in einer die besagte Läuferwelle enthaltenden Ebene liegt, dadurch gekennzeichnet, daß die besagten Ebenen der beiden Flügel (1, 2, 9) im wesentlichen zueinander senkrecht sind.

2. Windturbine gemäß Anspruch 1, dadurch gekennzeichnet, daß die beiden Flügel (1, 2, 9) mit Hilfe von zwei oder mehreren Ausgleichgewichten (4, 12) um die Läuferwelle (3) massenmäßig ausgeglichen sind.

3. Windturbine gemäß Anspruch 1 oder 2, dadurch gekennzeichnet, daß die Ausgleichgewichte (4) auf selbstrichtende Weise mit geringem radialem Abstand von der Läuferachse (3) an Lagern (6) hängen.

4. Windturbine gemäß Anspruch 3, dadurch gekennzeichnet, daß die Ausgleichgewichte (4) mit einer schwingungsmodulierenden Dämpfvorrichtung (7) und einem Federelement (8) zur Rückstellung in eine neutrale Lage ausgestattet sind.

## Revendications

1. Eolienne du type à écoulement transversal avec arbre de rotor équipé de deux pales, ces dernières étant du type à profil aérodynamique se prolongeant dans un plan renfermant l'arbre de rotor, la caractéristique principale étant que les plans des deux pales (1, 2, 9) sont perpendiculaires.

2. Eolienne conforme à la revendication 1, se caractérisant par le fait que les deux pales (1, 2, 9) sont équilibrés au niveau de l'arbre du rotor (3) par deux—ou plus—contre-poids (4, 12).

3. Eolienne conforme à le revendication 1 ou 2, se caractérisant par le fait que les contre-poids (4) sont suspendus à des supports (6), auto-alignés et avec peu de jeu diamétral par rapport à l'axe du rotor (3).

4. Eolienne conforme à la revendication 3, se caractérisant par le fait que les contre-poids (4) sont équipés d'un dispositif anti-vibrations (7) et d'un ressort permettant de revenir à un point mort.

# FIG.1

FIG. 2a

FIG. 2b

FIG. 2c

0010078

# FIG. 3a

# FIG. 3b

# FIG. 3c

0010078

FIG. 4a

FIG. 4b

FIG. 4c

4

FIG. 5a

FIG. 5b

FIG. 5c

$\mu = R\Omega/V$

5

# FIG.6

# FIG.7a

# FIG.7b

# FIG.7c